# EUROPEAN PATENT SPECIFICATION

(11) **EP 4 549 325 B1**
(45) Date of publication and mention of the grant of the patent: **02.09.2026**
(21) Application number: 24209962.0
(22) Date of filing: 30.10.2024
(51) Int. Cl.: B64F 5/60

(54) **GAS TURBINE ENGINE DRONE INSPECTION SYSTEM**
GASTURBINENMOTORDROHNENINSPEKTIONSSYSTEM
SYSTÈME D'INSPECTION DE MOTEUR À TURBINE À GAZ AVEC DRONE

(30) Priority: 30.10.2023 US 202318497600
(43) Date of publication of application: 07.05.2025
(73) Proprietor: RTX Corporation, Farmington, CT 06032 (US)
(72) Inventor: SCHAFER, Bradley C., Farmington, 06032 (US)
(74) Representative: Dehns

(56) References cited:
- KR-A- 20200 114 858
- KR-A- 20230 102 082
- US-A1- 2018 131 864
- US-A1- 2023 244 234
- US-B2- 10 520 943
- US-B2- 10 679 066

## Description

### TECHNICAL FIELD

The present disclosure relates to gas turbine engines, and particularly systems and methods for inspection of gas turbine engines.

### BACKGROUND

Gas turbine engines are required to be inspected, usually at predetermined intervals according to a maintenance schedule. Such inspections are often invasive, time-consuming, and expensive because the engine (and thus aircraft) is out-of-service during inspection. Inspections, however, are key to identifying distress in engine components, which may then require repair or replacement. Some inspections need to be performed after each flight and can be difficult to conduct. KR 2023-0102082 A provides a prior art aircraft inspection automation system based on image and explainable Al.

### SUMMARY

A system for inspection of a gas turbine engine according to an example of the present invention includes at least one drone operable for flight and equipped with an imaging device and a light source, and at least one processor configured to operate the at least one drone to fly into a gas turbine engine to a first position with respect to a component in the gas turbine engine, operate the imaging device and the light source to take an image of a target surface of the component from the first position, and identify whether the image includes an obstruction blocking a portion of the target surface from view of the imaging device. In response to identifying the obstruction, the at least one drone operates to fly to a second position from which there is a line-of-sight to the target surface without the obstruction, and operates the imaging device and the light source to obtain an unobstructed image of the target surface from the second position.

In an embodiment of the above, the component is a fan blade and the obstruction is an inlet guide vane.

In a further embodiment of any of the foregoing embodiments, the processor includes one or more neural networks configured to identify whether the image includes the obstruction.

In a further embodiment of any of the foregoing embodiments, the one or more neural networks is configured to identify an abnormality in the target surface from the image.

In a further embodiment of any of the foregoing embodiments, the one or more neural networks is configured to navigate the at least one drone.

In a further embodiment of any of the foregoing embodiments, the at least one drone includes first and second drones. The imaging device of the first drone takes the image of the target surface from the first position and the image device of the second drone taking the unobstructed image from the second position.

In a further embodiment of any of the foregoing embodiments, the imaging device includes a borescope.

A further embodiment of any of the foregoing embodiments includes a docking station on an aircraft associated with the gas turbine engine from which the at least one drone is deployed to fly into the gas turbine engine.

A further embodiment of any of the foregoing embodiments includes an operator interface configured to permit an operator to take images using the imaging device.

A method for inspection of a gas turbine engine according to an example of the present invention includes operating at least one drone to fly into a gas turbine engine to a first position with respect to a component in the gas turbine engine. The at least one drone is equipped with an imaging device and a light source. The imaging device and the light source are operated to take an image of a target surface of the component from the first position and identify whether the image includes an obstruction that blocks a portion of the target surface from view of the imaging device. In response to identifying the obstruction, the at least one drone operates to fly to a second position from which there is a line-of-sight to the target surface without the obstruction, and operates the imaging device and the light source to obtain an unobstructed image of the target surface from the second position.

In an embodiment of the above, the identifying of whether the image includes an obstruction is performed using one or more neural networks.

A further embodiment of any of the foregoing embodiments includes identifying from the image whether the target surface includes an abnormality.

In a further embodiment of any of the foregoing embodiments, the at least one drone includes first and second drones, and includes coordinating operation of the first and second drones to take the image of the target surface from the first position with the imaging device of the first drone and take the unobstructed image from the second position with the imaging device of the second drone.

In a further embodiment of any of the foregoing embodiments, the imaging device includes a borescope, and including operating the drone to deploy the borescope to take the unobstructed image.

A further embodiment of any of the foregoing embodiments includes operating the at least one drone to deploy from a docking station on an aircraft that is associated with the gas turbine engine.

A further embodiment of any of the foregoing embodiments includes manually taking the image through an operator interface that is configured to operate the imaging device.

The present disclosure may include any one or more of the individual features disclosed above and/or below alone or in any combination thereof.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates a system for drone inspection of a gas turbine engine.
Figure 2 illustrates a controller for operating the drone.
Figure 3 illustrates an example of a drone.
Figure 4 illustrates a drone taking an image of a target surface from a first position.
Figure 5 illustrates a drone taking an image of the target surface from a second position.

In this disclosure, like reference numerals designate like elements where appropriate and reference numerals with the addition of one-hundred or multiples thereof, if used, designate modified elements that are understood to incorporate the same features and benefits of the corresponding elements. Terms such as "first" and "second" used herein are to differentiate that there are two architecturally distinct components or features. Furthermore, the terms "first" and "second" are interchangeable in that a first component or feature could alternatively be termed as the second component or feature, and vice versa.

### DETAILED DESCRIPTION

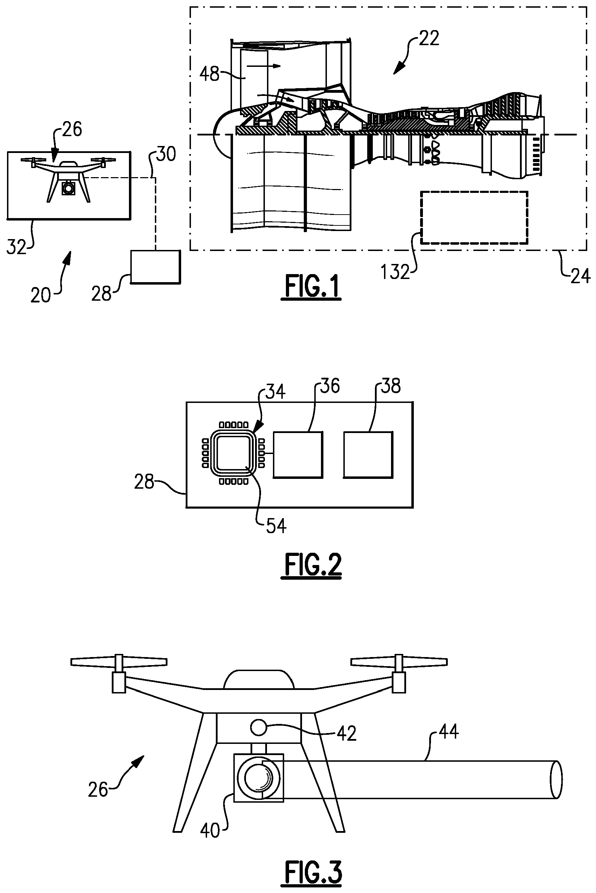

Figure 1 schematically illustrates a system 20 for inspection of a gas turbine engine 22 that is associated with an aircraft, which is generally designated at 24. As will be appreciated from this disclosure, the system 20 provides for automated, intelligent inspection that may reduce or replace the need for manual inspection in which maintenance personnel must enter the engine 22, particularly engines with long inlets that are confined and unconducive to easy manual inspection.

The system 20 includes at least one drone 26 and a controller 28. The drone 26 may also be referred to as an unmanned aerial vehicle. The controller 28 is in communication with the drone 26, such as by a wired or wireless connection 30. As an example, the drone 26 is a propeller-based, multirotor design, such as a quadcopter. In general, the drone 26 is miniature in size so as to be able to enter into the engine 22 and maneuver therein with clearance to be able to rotate and traverse the engine components being inspected.

In the example shown, the system 20 includes a docking station 32 from which the drone 26 deploys for inspection of the engine 22. For example, the system 20 as shown is a "non-dedicated" system that is remotely located from the aircraft 24. In that regard, the docking station 32 may be mobile, such as on a wheeled cart or vehicle or small enough to fit in a hand-carried case or backpack such that it can be moved to into proximity of the engine 22 or moved to service multiple engines across different aircrafts. Alternatively, however, the system 20 is a "dedicated" system that is intended to service the engine or engines of a single aircraft and, in that regard, the docking station 32 is on the aircraft 24, as designated at 132. The docking station 32 (or 132) serves as a point for take-off and landing of the drone 26, but may also be configured to refuel or recharge the drone 26, and may include a computerized device or other electronics for communicating with and/or controlling flight and operation of the drone 26.

Figure 2 illustrates the controller 28, which in this example includes at least one processor 34, a memory 36, and, optionally, an operator interface 38, such as a screen, keyboard, and/or input device (e.g., a mouse). In one example, the controller 28 is in the docking station 32, but it may alternatively be in a computerized device (e.g., a tablet), in the drone 26, or split among the drone 26, the docking station 32, and/or a computerized device. Instructions for operating the drone 26 and its equipment are saved in the memory 36 and executed by the processor or processors 34. In that regard, there may be multiple processors 34 located across the drone 26, docking station 32, and/or computerized device or devices that participate in executing the instructions.

Figure 3 illustrates the drone 26, which in this example is equipped with an imaging device 40, such as a camera, and a light source 42. Optionally, the drone 26 is also equipped with sensors to perform an additional non-destructive inspection, such as an eddy current inspection to confirm an anomaly identification. It is to be appreciated that although a single drone 26 is shown here with both the imaging device 40 and the light source 42, such equipment may alternatively be split among two or more drones that operate in coordination, such as one drone that has the imaging device 40 (i.e., a "camera drone") and another drone that has the light source 42 (i.e., a "light drone"). Multiple drones could be deployed in a swarm to either reduce the time to completely inspect one engine or conversely perform inspections on multiple aircraft simultaneously. Optionally, the imaging device 40 additionally includes a borescope 44. For example, the borescope 44 is an optical instrument that includes a rigid or flexible tube and one or more optical lenses through which a camera is linked for taking images or video. The borescope 44 may be telescopic or foldable such that it can be stowed in a compact, stored position on the drone 26 when not in use and then deployed to an extended position to permit imaging in a confined or difficult-to-access space in the engine 22.

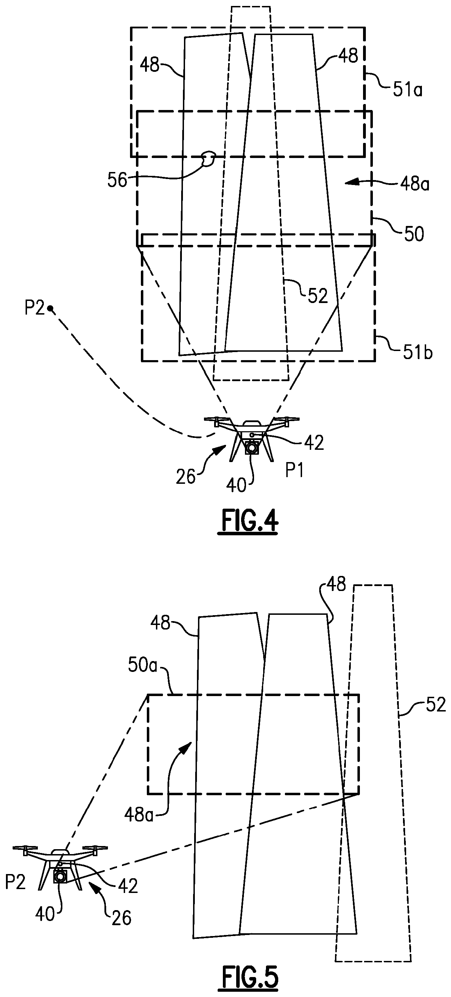

The processor 34 of the controller 28 is configured to operate the drone 26, in accordance with instructions stored in the memory 36, to fly into the gas turbine engine 22 for inspection and perform the functions described herein. The following examples are based on inspection of fan blades 48 of the engine 22, although it is to be understood that the system 20 is not limited and will be applicable for inspection of other engine components, as well as non-engine implementations. The processor 34 operates the drone 26 to fly to a first position P1 with respect to the fan blades 48, as shown in Figure 4. The position P1 may be a predetermined starting position for the drone 26, and the drone 26 may navigate to the position P1 based upon one or more reference locations in the engine 22 that are identified optically using the imaging device 40.

Once at the first position P1, the processor operates the imaging device 40 and light source 42 of the drone 26 to take an image 50 of a target surface 48a of the fan blades 48. In this case, however, there is an obstruction 52 (shown in phantom) between the imaging device 40 and the target surface 48a. In this example, the obstruction 52 is an inlet guide vane located forward of the fan blades 48 that blocks the view of a portion of the target surface 48a that is to be inspected. Thus, full inspection cannot be completed based on the image 50 from the first position P1. The obstruction 52 is not limited to guide vanes and other examples include, but are not limited to, platforms, casings, and adjacent blades that overlap so as to be in the field of view.

Of course, not all images will necessarily be obstructed, and the processor 34 thus performs an analysis to identify whether the image 50 includes an obstruction. In this regard, the processor 34 (Figure 2) includes one or more neural networks 54 that are configured to identify whether the image 50 includes the obstruction. A neural network is a network of artificial neurons or nodes that are operable for artificial intelligence learning and problem-solving. In that regard, the neural network 54 is trained beforehand based on examples of images (real or virtual) with and without obstructions so that the processor 34 can analyze instant images taken by the drone 26 and identify, based on the trained images, whether the instant image contains an obstruction. As an example, the neural network 54 is trained to asses and superimpose multiple images to obtain a photographic "map" of the blade 48 under inspection. For instance, as shown in Figure 4, multiple images 50/51a/51b are taken at different locations of the blade 48 under inspection, and the images 50/51a/51b are subsequently superimposed to produce a composite image of the entire blade 48. Additionally or alternatively, the obstruction 52 is identified manually by an operator who inspects the image, determines whether an obstruction is present, and then provides an input of the result of the obstruction determination (e.g., through the operator interface 38). It is to be further appreciated that the neural network 54 may also be used for navigation of the drone 26. For example, the neural network 54 is trained beforehand based on examples of reference features in the engine 22 so that the processor 34 can analyze instant images taken by the drone 26 and, based on the trained images, create a spatial map that can be referenced for present and future navigation in the engine 22.

If no obstruction is identified in the image 50, the processor 34 operates the drone 26 to move on to a new first position for inspection of another target surface, such as another portion of a blade or blades 48. If, however, an obstruction is identified, the processor 34 responsively operates the drone 26 to fly to a second position P2, as also shown in Figure 5, from which there is a line-of-sight to the target surface 48a without the obstruction 52 in order to take an unobstructed image 50a. An "unobstructed" image does not necessarily have no obstructions but, rather, refers to an image that is less obstructed in comparison to a prior obstructed image (e.g., by areal percentage). That is, the target surface 48a is not fully observable at the angle of the line-of-sight from the first position P1, but may be more fully observable from a different angle of the line-of-sight from the second position P2. The neural network 54 may also identify where the second position P2 is to be located in order to provide a higher probability for a better (less obstructed) view of the target surface 48a. For instance, based on the position of the obstruction 52 in the image 50, a second position P2 that is located in the opposite direction from the position of the obstruction is likely to provide a better line-of-sight past the obstruction 52 to the target surface 48a. The position P2 may alternatively be a preprogrammed location relative to P1, such as a position that is a predetermined distance from P1 on the same plane as P1 and the drone 26 (and with the drone 26 rotated to be directed at the target surface 48a). Additionally, if a high percentage of the target surface 48a is still obstructed in the second image 50a taken from position P2, the processor 34 operates the drone 26 to fly to a new second position P2 to retake the image 50a. The processor 34 may repeat the re-positioning and imaging across multiple second positions until a suitably unobstructed image is taken. Thus, the path of travel of the drone 26 is ultimately determined by the positions where the drone 26 is able to capture a full, unobstructed view of the target surface 48a, or at least multiple images that, when viewed in total, provide unobstructed views of all portions of the target surface 48a.

In further examples, the positions P1 and P2 may take into account information that the drone 26 has about the engine 22. For instance, the drone 26 may have information about the engine model, number of blades 48, the size and spacing of the blades 48, and the presence, size, and spacing of guide vanes stored in the memory 36 such that the drone 26 can move and operate more intelligently with respect to the locations of yet-to-be inspected blades 48 and already-inspected blades 48. For instance, the size and spacing of the guide vanes may not permit any single position, or even a combination of multiple positions, from which a fully unobstructed image or images can be taken. In that case, knowing beforehand that reiteratively moving to new second positions P2 would be in vain, the drone 26 may instead move to a second position in which the borescope 44 can be deployed past the guide vanes to get a clear image of a target surface.

In a further example in which the drone 26 does not have information of the number of blades 48, the drone 26 may utilize the imaging device 40 to identify and "count" the number of blades 48 as it inspects or prior to beginning inspection, such that it can determine whether all of the blades have been inspected for completion of an inspection mission.

In a further example, rather than a single drone 26, there are two or more drones 26 that operate in coordination. For instance, rather then the single drone 26 moving from the first position P1 to the second position P2, the processor 34 coordinates operation of a second drone 26 to move to position P2 to take the image 50a.

The processor 34 is also operable to identify whether the target surface 48a contains an abnormality 56 (Figure 4). An abnormality may be a crack, a region of corrosion, or other region of distress that is optically differentiated from regions of the component that contain no abnormalities. For example, the neural network 54 is configured to identify the abnormality 56. Similar to identifying the obstruction 52, the neural network 54 is trained beforehand based on examples of images (real or virtual) with and without abnormalities so the processor 34 can analyze instant images taken by the drone or drones 26 and identify, based on the trained images, whether the instant image contains an abnormality 56. Additionally, the operator interface 38 permits an operator to intervene in the inspection and take images using the imaging device 40 of the drone 26. For example, the operator instructs the drone 26 to take additional images, such as images to confirm presence of an abnormality 56, images at additional positions or angles, or images with different lighting and/or imaging settings. In accordance with the operator request and information saved about the images, positions, and flight path of the inspection, the processor 34 operates the drone 26 to navigate to positions where additional images will be taken.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art in the light of the appended claims. The scope of protection given to this disclosure can only be determined by studying the following claims.

## Claims

1. A system (20) for inspection of a gas turbine engine (22), the system (20) comprising:
at least one drone (26) operable for flight and equipped with an imaging device (40) and a light source (42); and
at least one processor (34) configured to:
operate the at least one drone (26) to fly into a gas turbine engine (22) to a first position (P1) with respect to a component (48) in the gas turbine engine (22), and **characterized in that**:
the at least one processor is further configured to:
operate the imaging device (40) and the light source (42) to take an image (50, 51a, 51b) of a target surface (48a) of the component (48) from the first position (P1),
identify whether the image (50, 51a, 51b) includes an obstruction (52) blocking a portion of the target surface (48a) from view of the imaging device (40),
in response to identifying the obstruction (52), operate the at least one drone (26) to fly to a second position (P2) from which there is a line-of-sight to the target surface (48a) without the obstruction (52), and
operate the imaging device (40) and the light source (42) to obtain an unobstructed image (50a) of the target surface (48a) from the second position (P2).

2. The system (20) as recited in claim 1, wherein the processor (34) includes one or more neural networks (54) configured to identify whether the image (50, 51a, 51b) includes the obstruction (52).

3. The system (20) as recited in claim 2, wherein the one or more neural networks (54) is configured to identify an abnormality (56) in the target surface (48a) from the image (50, 51a, 51b) and/or the one or more neural networks (54) is configured to navigate the at least one drone (26).

4. The system (20) as recited in any preceding claim, wherein the at least one drone (26) includes first and second drones (26), the imaging device (40) of the first drone (26) taking the image (50, 51a, 51b) of the target surface (48a) from the first position (P1) and the image device (40) of the second drone (26) taking the unobstructed image (50a) from the second position (P2).

5. The system (20) as recited in any preceding claim, wherein the imaging device (40) includes a borescope (44).

6. The system (20) as recited in any preceding claim, further comprising a docking station (32) on an aircraft (24) associated with the gas turbine engine (22) from which the at least one drone (26) is deployed to fly into the gas turbine engine (22).

7. The system (20) as recited in any preceding claim, further comprising an operator interface (38) configured to permit an operator to take images (50, 51a, 51b) using the imaging device (40).

8. A method for inspection of a gas turbine engine (22), the method comprising:
operating at least one drone (26) to fly into a gas turbine engine (22) to a first position (P1) with respect to a component in the gas turbine engine (22), the at least one drone (26) is equipped with an imaging device (40) and a light source (42); and
**characterized by**:
operating the imaging device (40) and the light source (42) to take an image (50, 51a, 51b) of a target surface (48a) of the component (48) from the first position (P1);
identifying whether the image (50, 51a, 51b) includes an obstruction (52) that blocks a portion of the target surface (48a) from view of the imaging device (40);
in response to identifying the obstruction (52), operating the at least one drone (26) to fly to a second position (P2) from which there is a line-of-sight to the target surface (48a) without the obstruction (52), and
operating the imaging device (40) and the light source (42) to obtain an unobstructed image (50a) of the target surface (48a) from the second position (P2).

9. The method as recited in claim 8, wherein the identifying of whether the image (50, 51a, 51b) includes an obstruction (52) is performed using one or more neural networks (54).

10. The method as recited in claim 8 or 9, further comprising identifying from the image (50, 51a, 51b) whether the target surface (48a) includes an abnormality (56).

11. The method as recited in claim 8, 9 or 10, wherein the at least one drone (26) includes first and second drones (26), and including coordinating operation of the first and second drones (26) to take the image (50, 51a, 51b) of the target surface (48a) from the first position (P1) with the imaging device (40) of the first drone (26) and take the unobstructed image (50a) from the second position (P2) with the imaging device (40) of the second drone (26).

12. The method as recited in any of claims 8 to 11, wherein the imaging device (40) includes a borescope (44), and including operating the drone (26) to deploy the borescope (44) to take the unobstructed image (50a).

13. The method as recited in any of claims 8 to 12, further comprising operating the at least one drone (26) to deploy from a docking station (32) on an aircraft (24) that is associated with the gas turbine engine (22).

14. The method as recited in any of claims 8 to 13, further comprising manually taking the image (50, 51a, 51b) through an operator interface (38) that is configured to operate the imaging device (40).

15. The method as recited in any of claims 8 to 14, wherein the component (48) is a fan blade (48) and the obstruction (52) is an inlet guide vane.

## Patentansprüche

1. Ein System (20) zur Inspektion eines Gasturbinentriebwerks (22), wobei das System (20) Folgendes umfasst:
mindestens eine Drohne (26), die für den Flug betriebsfähig und mit einer Bilderfassungsvorrichtung (40) und einer Lichtquelle (42) ausgestattet ist; und
mindestens einen Prozessor (34), der konfiguriert ist zum:
Betreiben der mindestens einen Drohne (26), um in ein Gasturbinentriebwerk (22) zu einer ersten Position (P1) in Bezug auf eine Komponente (48) im Gasturbinentriebwerk (22) zu fliegen, und
**dadurch gekennzeichnet, dass**:
der mindestens eine Prozessor ferner konfiguriert ist zum:
Betreiben der Bilderfassungsvorrichtung (40) und der Lichtquelle (42), um ein Bild (50, 51a, 51b) einer Zieloberfläche (48a) der Komponente (48) von der ersten Position (P1) aufzunehmen,
Identifizieren, ob das Bild (50, 51a, 51b) ein Hindernis (52) enthält, das einen Teil der Zieloberfläche (48a) vor der Sicht der Bilderfassungsvorrichtung (40) verdeckt,
als Reaktion auf die Identifizierung des Hindernisses (52), Betreiben der mindestens einen Drohne (26), um zu einer zweiten Position (P2) zu fliegen, von der aus eine direkte Sichtlinie zur Zieloberfläche (48a) ohne das Hindernis (52) besteht, und
Betreiben der Bilderfassungsvorrichtung (40) und der Lichtquelle (42), um ein ungehindertes Bild (50a) der Zieloberfläche (48a) von der zweiten Position (P2) zu erhalten.

2. System (20) nach Anspruch 1, wobei der Prozessor (34) ein oder mehrere neuronale Netzwerke (54) umfasst, die konfiguriert sind, um zu identifizieren, ob das Bild (50, 51a, 51b) das Hindernis (52) enthält.

3. System (20) nach Anspruch 2, wobei das eine oder die mehreren neuronalen Netzwerke (54) konfiguriert sind, um eine Anomalie (56) in der Zieloberfläche (48a) aus dem Bild (50, 51a, 51b) zu identifizieren und/oder das eine oder die mehreren neuronalen Netzwerke (54) konfiguriert sind, um die mindestens eine Drohne (26) zu navigieren.

4. System (20) nach einem der vorhergehenden Ansprüche, wobei die mindestens eine Drohne (26) eine erste und eine zweite Drohne (26) umfasst, wobei die Bilderfassungsvorrichtung (40) der ersten Drohne (26) das Bild (50, 51a, 51b) der Zieloberfläche (48a) von der ersten Position (P1) aufnimmt und die Bilderfassungsvorrichtung (40) der zweiten Drohne (26) das ungehinderte Bild (50a) von der zweiten Position (P2) aufnimmt.

5. System (20) nach einem der vorhergehenden Ansprüche, wobei die Bilderfassungsvorrichtung (40) ein Boreskop (44) umfasst.

6. System (20) nach einem der vorhergehenden Ansprüche, ferner umfassend eine Andockstation (32) an einem Luftfahrzeug (24), das mit dem Gasturbinentriebwerk (22) verbunden ist, von der aus die mindestens eine Drohne (26) eingesetzt wird, um in das Gasturbinentriebwerk (22) zu fliegen.

7. System (20) nach einem der vorhergehenden Ansprüche, ferner umfassend eine Bedienerschnittstelle (38), die konfiguriert ist, um einem Bediener zu ermöglichen, Bilder (50, 51a, 51b) mit der Bilderfassungsvorrichtung (40) aufzunehmen.

8. Verfahren zur Inspektion eines Gasturbinentriebwerks (22), wobei das Verfahren Folgendes umfasst:
Betreiben mindestens einer Drohne (26), um in ein Gasturbinentriebwerk (22) zu einer ersten Position (P1) in Bezug auf eine Komponente im Gasturbinentriebwerk (22) zu fliegen, wobei die mindestens eine Drohne (26) mit einer Bilderfassungsvorrichtung (40) und einer Lichtquelle (42) ausgestattet ist; und
**gekennzeichnet durch**:
Betreiben der Bilderfassungsvorrichtung (40) und der Lichtquelle (42), um ein Bild (50, 51a, 51b) einer Zieloberfläche (48a) der Komponente (48) von der ersten Position (P1) aufzunehmen;
Identifizieren, ob das Bild (50, 51a, 51b) ein Hindernis (52) enthält, das einen Teil der Zieloberfläche (48a) vor der Sicht der Bilderfassungsvorrichtung (40) verdeckt;
als Reaktion auf die Identifizierung des Hindernisses (52), Betreiben der mindestens einen Drohne (26), um zu einer zweiten Position (P2) zu fliegen, von der aus eine direkte Sichtlinie zur Zieloberfläche (48a) ohne das Hindernis (52) besteht; und
Betreiben der Bilderfassungsvorrichtung (40) und der Lichtquelle (42), um ein ungehindertes Bild (50a) der Zieloberfläche (48a) von der zweiten Position (P2) zu erhalten.

9. Verfahren nach Anspruch 8, wobei das Identifizieren, ob das Bild (50, 51a, 51b) ein Hindernis (52) enthält, unter Verwendung eines oder mehrerer neuronaler Netzwerke (54) durchgeführt wird.

10. Verfahren nach Anspruch 8 oder 9, ferner umfassend das Identifizieren aus dem Bild (50, 51a, 51b), ob die Zieloberfläche (48a) eine Anomalie (56) aufweist.

11. Verfahren nach Anspruch 8, 9 oder 10, wobei die mindestens eine Drohne (26) eine erste und eine zweite Drohne (26) umfasst, und einschließlich der Koordinierung des Betriebs der ersten und zweiten Drohne (26), um das Bild (50, 51a, 51b) der Zieloberfläche (48a) von der ersten Position (P1) mit der Bilderfassungsvorrichtung (40) der ersten Drohne (26) aufzunehmen und das ungehinderte Bild (50a) von der zweiten Position (P2) mit der Bilderfassungsvorrichtung (40) der zweiten Drohne (26) aufzunehmen.

12. Verfahren nach einem der Ansprüche 8 bis 11, wobei die Bilderfassungsvorrichtung (40) ein Boreskop (44) umfasst, und einschließlich des Betreibens der Drohne (26), um das Boreskop (44) einzusetzen, um das ungehinderte Bild (50a) aufzunehmen.

13. Verfahren nach einem der Ansprüche 8 bis 12, ferner umfassend das Betreiben der mindestens einen Drohne (26), um von einer Andockstation (32) an einem Luftfahrzeug (24), das mit dem Gasturbinentriebwerk (22) verbunden ist, eingesetzt zu werden.

14. Verfahren nach einem der Ansprüche 8 bis 13, ferner umfassend das manuelle Aufnehmen des Bildes (50, 51a, 51b) über eine Bedienerschnittstelle (38), die konfiguriert ist, um die Bilderfassungsvorrichtung (40) zu betreiben.

15. Verfahren nach einem der Ansprüche 8 bis 14, wobei die Komponente (48) ein Lüfterblatt (48) ist und das Hindernis (52) eine Einlassleitschaufel ist.

## Revendications

1. Système (20) pour l'inspection d'un moteur à turbine à gaz (22), le système (20) comprenant :
au moins un drone (26) capable de voler et équipé d'un dispositif d'imagerie (40) et d'une source de lumière (42) ; et
au moins un processeur (34) configuré pour :
faire fonctionner l'au moins un drone (26) pour voler dans un moteur à turbine à gaz (22) jusqu'à une première position (P1) par rapport à un composant (48) dans le moteur à turbine à gaz (22), et
**caractérisé en ce que** :
l'au moins un processeur est en outre configuré pour :
faire fonctionner le dispositif d'imagerie (40) et la source de lumière (42) pour prendre une image (50, 51a, 51b) d'une surface cible (48a) du composant (48) depuis la première position (P1),
identifier si l'image (50, 51a, 51b) comprend une obstruction (52) bloquant une partie de la surface cible (48a) de la vue du dispositif d'imagerie (40),
en réponse à l'identification de l'obstruction (52), faire fonctionner l'au moins un drone (26) pour voler vers une deuxième position (P2) à partir de laquelle il y a une ligne de visée vers la surface cible (48a) sans l'obstruction (52), et
faire fonctionner le dispositif d'imagerie (40) et la source de lumière (42) pour obtenir une image non obstruée (50a) de la surface cible (48a) depuis la deuxième position (P2).

2. Système (20) selon la revendication 1, dans lequel le processeur (34) comprend un ou plusieurs réseaux neuronaux (54) configurés pour identifier si l'image (50, 51a, 51b) comprend l'obstruction (52).

3. Système (20) selon la revendication 2, dans lequel le ou les réseaux neuronaux (54) sont configurés pour identifier une anomalie (56) dans la surface cible (48a) à partir de l'image (50, 51a, 51b) et/ou le ou les réseaux neuronaux (54) sont configurés pour naviguer l'au moins un drone (26).

4. Système (20) selon l'une quelconque des revendications précédentes, dans lequel l'au moins un drone (26) comprend un premier et un deuxième drones (26), le dispositif d'imagerie (40) du premier drone (26) prenant l'image (50, 51a, 51b) de la surface cible (48a) depuis la première position (P1) et le dispositif d'imagerie (40) du deuxième drone (26) prenant l'image non obstruée (50a) depuis la deuxième position (P2).

5. Système (20) selon l'une quelconque des revendications précédentes, dans lequel le dispositif d'imagerie (40) comprend un endoscope (44).

6. Système (20) selon l'une quelconque des revendications précédentes, comprenant en outre une station d'accueil (32) sur un aéronef (24) associé au moteur à turbine à gaz (22) à partir de laquelle l'au moins un drone (26) est déployé pour voler dans le moteur à turbine à gaz (22).

7. Système (20) selon l'une quelconque des revendications précédentes, comprenant en outre une interface opérateur (38) configurée pour permettre à un opérateur de prendre des images (50, 51a, 51b) en utilisant le dispositif d'imagerie (40).

8. Procédé d'inspection d'un moteur à turbine à gaz (22), le procédé comprenant :
faire fonctionner au moins un drone (26) pour voler dans un moteur à turbine à gaz (22) jusqu'à une première position (P1) par rapport à un composant dans le moteur à turbine à gaz (22), l'au moins un drone (26) étant équipé d'un dispositif d'imagerie (40) et d'une source de lumière (42) ; et
**caractérisé par** :
faire fonctionner le dispositif d'imagerie (40) et la source de lumière (42) pour prendre une image (50, 51a, 51b) d'une surface cible (48a) du composant (48) depuis la première position (P1) ;
identifier si l'image (50, 51a, 51b) comprend une obstruction (52) qui bloque une partie de la surface cible (48a) de la vue du dispositif d'imagerie (40) ;
en réponse à l'identification de l'obstruction (52), faire fonctionner l'au moins un drone (26) pour voler vers une deuxième position (P2) à partir de laquelle il y a une ligne de visée vers la surface cible (48a) sans l'obstruction (52) ; et
faire fonctionner le dispositif d'imagerie (40) et la source de lumière (42) pour obtenir une image non obstruée (50a) de la surface cible (48a) depuis la deuxième position (P2).

9. Procédé selon la revendication 8, dans lequel l'identification de si l'image (50, 51a, 51b) comprend une obstruction (52) est effectuée en utilisant un ou plusieurs réseaux neuronaux (54).

10. Procédé selon la revendication 8 ou 9, comprenant en outre l'identification à partir de l'image (50, 51a, 51b) si la surface cible (48a) comprend une anomalie (56).

11. Procédé selon la revendication 8, 9 ou 10, dans lequel l'au moins un drone (26) comprend un premier et un deuxième drones (26), et comprenant la coordination du fonctionnement du premier et du deuxième drones (26) pour prendre l'image (50, 51a, 51b) de la surface cible (48a) depuis la première position (P1) avec le dispositif d'imagerie (40) du premier drone (26) et prendre l'image non obstruée (50a) depuis la deuxième position (P2) avec le dispositif d'imagerie (40) du deuxième drone (26).

12. Procédé selon l'une quelconque des revendications 8 à 11, dans lequel le dispositif d'imagerie (40) comprend un endoscope (44), et comprenant le fonctionnement du drone (26) pour déployer l'endoscope (44) pour prendre l'image non obstruée (50a).

13. Procédé selon l'une quelconque des revendications 8 à 12, comprenant en outre le fonctionnement de l'au moins un drone (26) pour se déployer à partir d'une station d'accueil (32) sur un aéronef (24) qui est associé au moteur à turbine à gaz (22).

14. Procédé selon l'une quelconque des revendications 8 à 13, comprenant en outre la prise manuelle de l'image (50, 51a, 51b) via une interface opérateur (38) qui est configurée pour faire fonctionner le dispositif d'imagerie (40).

15. Procédé selon l'une quelconque des revendications 8 à 14, dans lequel le composant (48) est une aube de soufflante (48) et l'obstruction (52) est une aube directrice d'entrée.
